# EUROPEAN PATENT SPECIFICATION

(11) **EP 2 540 677 B1**
(45) Date of publication and mention of the grant of the patent: **25.11.2020**
(21) Application number: 10856102.8
(22) Date of filing: 30.12.2010
(51) Int. Cl.: C02F 1/78

(54) **CONTACT REACTION TOWER WITH INTERNAL CIRCULATION OZONE USED IN INDUSTRIAL WASTEWATER ADVANCED TREATMENT**
KONTAKTREAKTIONSTURM MIT INNENZIRKULATIONSOZON ZUR WEITERGEHENDEN BEHANDLUNG VON INDUSTRIEABWASSER
TOUR DE RÉACTION PAR CONTACT AVEC CIRCULATION INTERNE D'OZONE UTILISÉE DANS LE TRAITEMENT DE POINTE DES EAUX USÉES INDUSTRIELLES

(30) Priority: 19.08.2010 CN 201010258204
(43) Date of publication of application: 02.01.2013
(73) Proprietor: Nanjing University, Nanjing, Jiangsu 210093 (CN)
(72) Inventor: REN, Hongqiang, Nanjing Jiangsu 210093 (CN); XU, Ke, Nanjing Jiangsu 210093 (CN); DING, Lili, Nanjing Jiangsu 210093 (CN); REN, Xinkun, Nanjing Jiangsu 210093 (CN); WANG, Yanru, Nanjing Jiangsu 210093 (CN)
(74) Representative: Engelhard, Markus
(86) International application number: PCT/CN2010/080498
(87) International publication number: WO 2012/022104

(56) References cited:
- EP-A1- 1 859 675
- CN-A- 101 486 522
- CN-A- 101 913 694
- CN-U- 2 067 601
- CN-U- 201 442 890
- CN-Y- 2 403 494
- CN-Y- 2 486 546
- CN-Y- 201 334 394
- JP-A- 6 015 281
- US-A- 4 626 345
- US-A- 5 968 352
- US-B2- 7 488 413

## Description

### Field of the Invention

This invention relates to a contact reaction tower, specifically, a contact reaction tower with internal circulation of ozone for advanced treatment of industrial wastewater.

### Background of the Invention

Ozone is one of strong oxidants. It induces strong oxidative degradation of organic substances in wastewater and is able to turn complex organics into simple ones, which consequently brings about such effects as decolorization, deodorization, COD reduction and increase of biodegradability. The residual ozone decomposes into oxygen naturally without any secondary pollution. Since its reaction with organics often takes place quickly, thoroughly and without any secondary pollution, and its generation can be conveniently conducted anywhere with wide availability of the raw material and low requirements of technical equipments, ozone is increasingly widely used for treating industrial wastewater, particularly for the advanced treatment of industrial wastewater. When being used in this way, ozone bears double functions: on the one hand, it ensures up-to-standard discharge of the effluent, and on the other hand, it realizes reuse of the reclaimed water, namely, recyclable use of water resources.

Currently, the ozone used for wastewater treatment is mainly generated by air. Since ozone comprises only 0.6%∼1.2% (volumetrically) of the ozonized air generated by the ozone generator, and according to the ideal gas equation and Dalton's law of partial pressures, the partial pressure of ozone comprises only 0.6%∼1.2% of that of the ozonized air as well (which means that when injecting ozonized air into water under the water temperature of 25°C, the solubility of ozone is only 3∼7mg/L), it is of crucial significance to achieve sufficient contact between ozonized air and water, higher solubility of ozone and better gas-water mixing so that the ozonation effect can be improved.

When used for wastewater treatment, the ozonized air and wastewater are mixed together in a specially designed gas-water mixing device so that the pollutants in wastewater can be removed. The area and time of the contact between ozonized air and wastewater, the concentration of ozone and the reaction pressure are major factors determining the efficiency of the gas-water mixing. The major methods currently used for mixing ozone and water are: (1) aerational method: this is a convenient, traditional method. During the operation, ozone gas is pumped under a certain pressure through microbubble diffusers to form a great number of microbubbles, which then ensures ozone's sufficient contact with water. The smaller the bubbles, the greater the depth of water, the longer the contact time, the better mixing effect; (2) fluid-jetting method: also called Venturi method; this method takes advantage of the phenomenon that the flowing speed of water in a pipe increases when the water flows through a constricted section of the pipe; the quickening of flowing speed will form a certain amount of negative pressure with which ozone and water can be effectively mixed together. The jetting method presents high efficiency, but it requires strict strategies in designing and installment; (3) turbine negative suction method: this method mixes ozone and water through connecting a ozone gas pipe to a pump-driven water pipe; the negative pressure caused by the pump will suction ozone into water and the mixing of ozone and water occurs therein. This method presents high efficiency, and is widely used in wastewater treatment field, however, since it shares similar working principles with the Venturi method, it also has strict designing and installment requirements, particularly, the strict control of the amount of ozone gas, for too much ozone gas will undermine the pump's function in supplying water; (4) reaction tower method: this method involves a considerably high tower wherein the water is sprayed in the form of fog downward from the top of the tower while the ozonized air diffuses in the form of microbubbles upward from micropore diffusers equipped at the bottom of the tower; the opposite directions of water and ozone ensure sufficient contact. This method can be further divided into the type with packing materials and the type without packing materials. It presents desirable mixing effect, but has such defects as high cost and frequent clogging of packing materials.

In addition, researchers in this field keep bringing forward improvements to enhance the solubility of ozone in water. For example, H. Fumio ("Development of highconcentration ozone water machine." Ishikawajima-Harima Engineering Review (Japan), 1996, 36 (3): 159- 164.) invented a device for generating high-concentration ozonized water, the concentration of ozone generated thereby reaches 6mg/L. R. Michel Meyer et, al (R. Michael Meyer, Angelo L. Mazzei. "Side stream injection with high efficiency venturi and radial mixing nozzle." Proceedings of the 14th Ozone World Congress, Dearborn, Michigan, U.S.A., 1999. 527-538.) conducted intensive experiments on improving ozone's solubility. They combined the fluid jetter and the spray nozzle together and successfully increased the concentration of ozone in water up to 4.8mg/L (by mass) by using ozone gas of 128mg/m³ (by mass), that is to say, the dissolution efficiency of ozone reaches 75%. ZHANG Zhitao, et, al (ZHANG Zhitao, XIANYU Ze, ZONG Xu, et, al. "Ozone Dissolution in Water During Pipe Transportation." Journal of Northeastern University (Natural Science) 23.10 (2002): 1016-1019) tried with experiments to find out the factors influencing ozone's solubility with a high-concentration ozone generating system. Their findings show that high concentration of ozone gas, low gas-water volume ratio and high pressure in the generating system are helpful for improving the dissolution efficiency of ozone. SHI Wensheng in his patent (ZL 01113892.0) disclosed a method in which a section of reducing pipe was adopted to replace the oxidation tower, tank and the pipe network required thereby in the traditional diffusion method. This method can achieve extraordinarily high mass transfer rate and significant treatment effect whereas the consumption of ozone is reduced in half. One of the defects of this method lies in that it is not suitable for treating the industrial wastewater with large flow rate.

EP 1 859 675 A1 describes an ozonized water producing apparatus which includes a pipeline for passing water to be treated through, a gas-liquid mixing structure provided halfway in the pipeline, and an ozone supply structure for supplying ozone into the gas-liquid mixing structure.

US 5,968,352 discloses a gas-liquid contacting system comprising a contact tank producing a co-current flow of gas and liquid and being constructed of coaxial inner and outer tanks, and including a gas injector positioned external to both tanks.

CN 101486522 A discloses an oxidation reactor comprising a water outlet tank, a jet aerator and a jet aeration.

CN 2067601 discloses a chemical reactor configured to be a jacketed batch reactor provided with inner and outer jackets.

CN 2486546 discloses device for biochemical treatment of sewage composed of a tank body, a micro-circulation aerator, an inlet water distribution structure, a sludge discharge structure, an outlet water distribution structure, a lower and upper layer biological filler and an aeration concentrated discharge structure.

CN 2403494 describes an aeration mixing reactor.

JP 6015281 A discloses a water purification tower.

CN 201442890 discloses a small-scale sewage biological treatment system including a biological reaction tank equipped with a sewage inlet pipe and an aeration device.

### Summary of the Invention

### 1. Technical Problems to be Solved

In consideration of problems existing in the ozone oxidation method for advanced treatment of industrial wastewater, this invention provides a contact reaction tower with internal circulation of ozone for advanced treatment of industrial wastewater. It can effectively solve such problems as low solubility of ozone in water, poor mixing efficiency of common gas-water mixing devices, great fluctuation of the quality of industrial wastewater, and frequent clogging of packing materials. In addition, it can also provide dissolved oxygen for the succeeding aerobic bio-treatment processes.

### 2.Technical Solutions

The present invention relates to a contact reaction tower with internal circulation of ozone for advanced treatment of industrial wastewater, in accordance with the appended claims.

The working principle whereon this invention is based is: the internal circulation of the effluent caused by air lifting can enhance the disturbance of water current and bring about desirable turbulence of the effluent in the reaction tower; through ozonized air's countercurrent contact with wastewater in the influent pipes and its mixing contact with wastewater in the packing area, the contact time between ozonized air and wastewater is extended, which consequently enhances ozone's solubility in wastewater and realizes sufficient gas-water contact and mixing; in order to cope with great fluctuation of the quality of industrial wastewater, this invention adopts the internal circulation of the effluent to enhance the reaction tower's capability against the impact load and to guarantee desirable quality of the effluent and convenience of adjustment and control; in order to solve frequent clogging appeared in the treatment of industrial wastewater, the gas-water device is equipped to wash the packing materials periodically so that the desirable efficiency of gas-war mixing is guaranteed; in addition, the air lifting mentioned above can also increase the concentration of oxygen in wastewater with its pre-aeration function, which is beneficial to the succeeding aerobic bio-treatment processes.

The Technical Solutions Provided in This Invention:
a contact reaction tower with internal circulation of ozone for advanced treatment of industrial wastewater, consisting of a central cylinder and an outer cylinder, wherein the central cylinder is equipped with lift pipes and influent pipes, and on the wall of the central cylinder exist backflow holes; the lift pipes, influent pipes and flowback holes form a circulation of the water current between the central cylinder and the outer cylinder, which then realizes the internal circulation of the reaction tower; the whole reaction tower is sealed up and on the top of the reaction tower stands a vent pipe, and wherein the central cylinder is sealed up at both ends and equipped with 2∼4 lift pipes and 1∼2 influent pipes; wherein within the lift pipes are installed micropore aeration pipes; and wherein the wall of the central cylinder that is beneath the bottom plate is designed with perforations for water distribution.

The central cylinder is sealed up at both ends and equipped with 2∼4 lift pipes and 1∼2 influent pipes; the upper openings of lift pipes are located above the top cap of the central cylinder while the lower openings of lift pipes are a little higher than the bottom plate of the central cylinder; within the lift pipes are micropore aeration pipes, which can lift the water in the central cylinder; the influent pipes run through the whole central cylinder, namely, their upper openings are located above the top cap of the central cylinder and their lower openings are located under the bottom plate of the central cylinder; the wall of the central cylinder that is beneath the bottom plate is designed with perforations for water distribution, and through these perforations the effluent in the influent pipes flows into the outer cylinder; there exist micropore diffusers right under the lower openings of the influent pipes, the ozonized air released through these micropore diffusers going upward into the influent pipes; at the lower parts of the influent pipes exist check valves allowing only the downward (rather than upward) flowing direction of the water in the influent pipes, which can effectively prevent gas and water from flushing into the influent pipes during washing operation; there are 2∼4 backflow holes on the wall of the central cylinder that is higher than that of outer cylinder.

The outer cylinder is designed with a packing area, packing materials used therein are generally Pall rings but not limited to Pall rings; the packing materials are loaded on the evenly perforated support plate at the bottom of the packing area; a mesh is secured on the top of the packing area to prevent the packing materials from flowing away with water; micropore diffusers used for releasing ozonized air, a perforated gas distribution pipe and a perforated water distribution pipe are all designed under the packing area; a discharge pipe used for washing operation is located in the upper part of the reaction tower.

This invention discloses a contact reaction tower with internal circulation of ozone for advanced treatment of industrial wastewater in accordance with the appended claims. The effluent firstly forms an internal circulation through air lifting, and then merges into the influent coming out of the main influent pipe of the reaction tower; the influent flows downward through the influent pipes in the central cylinder of the reaction tower and has a preliminary countercurrent contact therein with the ozonized air going upward from the micropore diffusers; then, the influent flows out from the influent pipes into the outer cylinder of the reaction tower, at the bottom of which exist micropore diffusers for releasing ozonized air as well; the gas and water go together upward through the packing area and the fast upward flow speed forms a desirable turbulent state, which is beneficial to sufficient dissolution of ozonized air and effective contact and reaction between the water and the air; after flowing through the packing area, part of the effluent flows back into the central cylinder through backflow holes and will initiate another round of internal circulation through air lifting, and the residual effluent flows out of the reaction tower. If the concentration of pollutants in the influent is too high, the water volume of the internal circulation should be increased accordingly so that the impact load against the reaction tower can be reduced; in order to guarantee the good quality of the effluent, the reaction time should also be extended in a short term. Under and in the middle of the packing area exist washing devices; they are used to wash packing materials periodically to prevent the clogging of the packing area, which will otherwise undermine the efficiency of gas-water mixing. In addition, the air lifting mentioned above can also increase the concentration of oxygen in the wastewater with its pre-aeration function, which is beneficial to the succeeding aerobic bio-treatment processes.

### 3. Beneficial Effects

This invention discloses a contact reaction tower with internal circulation of ozone for advanced treatment of industrial wastewater. The internal circulation of the effluent can increase the disturbance of water current and bring about desirable turbulence of the effluent in the reaction tower; the effluent flows through ozonized air into the influent pipes, where it forms countercurrent contact with the wastewater; then, it flows into the packing area and forms mixing contact with the wastewater therein; both the countercurrent contact and the mixing contact extend the contact time between the wastewater and the ozonized air, which consequently enhances ozone's solubility in water and realizes sufficient contact and mixing between the ozonized air and the wastewater; the internal circulation of the effluent can also enhance the reaction tower's capability against impact load, which guarantees desirable quality of the effluent and convenience of adjustment and control; the gas-water devices are used to wash packing materials periodically so that the efficiency of gas-water mixing is ensured; in addition, the air lifting mentioned above can also increase the concentration of oxygen in the wastewater with its pre-aeration function, which is beneficial to the succeeding aerobic bio-treatment processes.

### Description of the Drawing

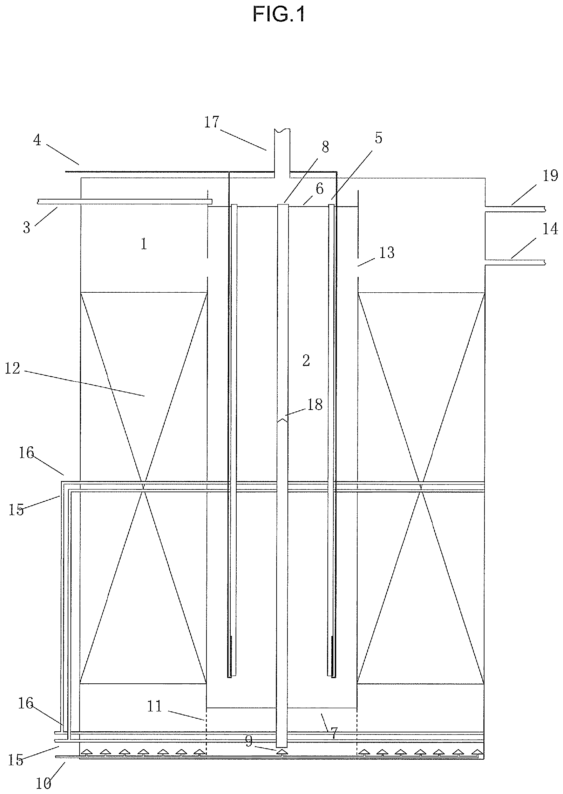

Figure 1 is the structural diagram of this invention, wherein: 1 outer cylinder of the reaction tower, 2 central cylinder of the reaction tower, 3 main influent pipe of the reaction tower, 4 air pipe, 5 lift pipes, 6 top cap of the central cylinder, 7 bottom plate of the central cylinder, 8 influent pipe(s) of the central cylinder, 9 micropore diffusers, 10 influent pipe of ozonized air, 11 perforated wall for water distribution, 12 packing area, 13 backflow holes, 14 main discharge pipe of the reaction tower; 15 gas distributor for washing packing materials, 16 water distributor for washing packing materials, 17 ozone vent pipe, 18 check valve, 19 discharge pipe for washing operation.

### Specific Embodiments

This invention is further illustrated in the following in combination with the structural diagram.

A contact reaction tower with internal circulation of ozone for advanced treatment of industrial wastewater. The effluent in the central cylinder 2 flows into the lifting pipes 5 through aerational water-lifting of the air pipe 4; it then flows out from the upper openings of the lifting pipes 5 and merges into the influent coming out of the main influent pipe of the reaction tower 3; the influent flows downward into the influent pipes of the central cylinder 8, where the effluent has a preliminary countercurrent contact with the ozonized air going upward from the micropore diffusers 9 located right under the influent pipes of the central cylinder 8; then, the influent flows out from the influent pipes of the central cylinder 8 into the outer cylinder 1 of the reaction tower through the perforated wall for water distribution 11; the ozonized air is pumped in from the influent pipe 10 and is released by micropore diffusers 9; the gas and the water go together upward through the packing area 12 of the outer cylinder 1 and the fast upward flow speed forms a desirable turbulent state, which is beneficial to sufficient dissolution of ozonized air and effective contact and reaction between the water and the air; after flowing through the packing area 12, part of the effluent flows back into the central cylinder 2 through backflow holes 13 and will initiate another round of internal circulation through the air lifting, and the residual effluent flows out of the reaction tower through the main discharge pipe 14; the residual ozone will be discharged into the atmosphere. This ends up a whole round of reaction. If the concentration of pollutants in the influent is too high, the water volume of the internal circulation should be increased by way of pumping in more air so that the impact load against the reaction tower can be reduced; in order to guarantee the good quality of the effluent, the reaction time should be extended accordingly in a short term. A gas distributor 15 and a water distributor 16 are equipped under and in the middle of the packing area; they are used to wash the packing materials in order to prevent the clogging of the packing area, which will otherwise undermine the efficiency of gas-water mixing; during the washing operation, the check valve 18 equipped on the main influent pipe 3 will prevent the gas and the water from flushing in, which will affect the washing effect; all the discharge pipes should be turned off during the washing operation, and the washing wastewater will be discharged from the discharge pipe 19 thereafter. All the pilot plants of the contact reaction towers with internal circulation of ozone mentioned in the following embodiments share the same basic structure with that has been mention above.

### Embodiment 1

A pilot plant of a contact reaction tower with internal circulation of ozone constructed for a vitamin C factory, made of stainless steel. The inner diameter of the reaction tower is 1.5m and the height of the reaction tower is 9m; the inner diameter of the central cylinder is 0.6m and the height of the central cylinder is 8m; the top cap of the central cylinder is 0.4m lower than that of the reaction tower and the bottom plate of the central cylinder is 0.6m higher than the bottom of the reaction tower. The central cylinder is equipped with 2 lift pipes, the inner diameter of which is 52mm; within each lift pipe exists a micropore aeration pipe; in the center of the central cylinder is the influent pipe, which is 200mm in inner diameter and 0.2m higher than the bottom of the reaction tower; right under the influent pipes exist micropore diffusers. The perforated wall for water distribution is 0.6m high, and the perforations on the wall are 20mm in diameter and the distance between perforations is 50mm. There are micropore diffusers at the bottom of the outer cylinder of the reaction tower. The packing materials used in the packing area are Pall rings; the packing area is 6.5m in height; its bottom is 1m higher than that of the reaction tower and its top is 1.5m lower than that of the reaction tower. At the places 0.4m and 0.2m lower than the bottom of the packing area stand the gas distributor and the water distributor respectively, and in the middle of the packing area stand the gas distributor and the water distributor as well; these gas and water distributors are used for washing the packing materials. Two backflow holes are located at the upper part of the central cylinder, 0.8m to the top; on the wall of the outer cylinder exists the main discharge pipe, at the same level with the backflow holes. At the center of the tower top stands a vent pipe, being 5m in length. The effective volume of the whole reaction tower is 5m³.

The effluent from the secondary sedimentation tank of the vitamin C factory is used as the influent of this pilot plant of the contact reaction tower with internal circulation of ozone; keeping flow rate at 10m³/h and HRT (hydraulic retention time) of 30min. The quality parameters of the influent are: COD_{cr}=280mg/L, colority =300. When ozone is pumped in at the rate of 200mg/L, the quality parameters of the treated effluent are COD_{cr}=160mg/L, colority =80. Under the same conditions, the quality parameters of the effluent treated by the common ozone reaction tower are COD_{c}r=190mg/L, colority =120. Obviously, the contact reaction tower with internal circulation of ozone demonstrates better treatment effect than the common ozone contact reaction tower due to its better gas-water mixing effect, higher dissolution of ozone in the water and more sufficient reaction.

In addition, the concentration of oxygen dissolved in the effluent is 1∼2 mg/L, which is beneficial to the succeeding aerobic bio-treatment processes, such as MBBR, biological aerated filter, etc., in further removing carbon and nitrogen. As is shown in the operation, there might be many suspended solids in the effluent filtered by fiber balls in the secondary sedimentation tank; these suspended solids will cause clogging of the packing materials within days and consequently reduce the treatment efficiency. When the clogging occurs, the gas and water distributors can be used to wash the packing materials so that the high treatment efficiency will be restored.

### Embodiment 2

The effluent from the secondary sedimentation tank of a vitamin B12 factory is used as the influent of this pilot plant of the contact reaction tower with internal circulation of ozone; keeping flow rate at 7 m³/h and HRT (hydraulic retention time) of 45min. The quality parameters of the influent are: COD_{cr}=420mg/L, colority =700. When ozone is pumped in at the rate of 300mg/L, the quality parameters of the treated effluent are COD_{cr}=260mg/L, colority =150. Under the same conditions, the quality parameters of the effluent treated by the common ozone reaction tower are COD_{cr}=310mg/L, colority =280.

## Claims

1. A contact reaction tower with internal circulation of ozone for advanced treatment of industrial wastewater, consisting of a central cylinder and an outer cylinder, wherein the central cylinder is equipped with lift pipes and influent pipes and on the wall of the central cylinder exist backflow holes; the lift pipes, influent pipes and flowback holes form a circulation of the water current between the central cylinder and the outer cylinder, which then realizes the internal circulation of the reaction tower; the whole reaction tower is sealed up and on the top of the reaction tower stands a vent pipe ; and, wherein the central cylinder is sealed up at both ends and equipped with 2∼4 lift pipes and 1∼2 influent pipes; wherein within the lift pipes are installed micropore aeration pipes; and wherein the wall of the central cylinder that is beneath the bottom plate is designed with perforations for water distribution.

2. A contact reaction tower with internal circulation of ozone as defined in claim 1, wherein in the central cylinder stand lift pipes, the upper ends of which run through the top cap of the central cylinder and the lower openings of which are located at the lower part of the central cylinder; the influent pipes run through the whole central cylinder, namely, their upper ends come out of the top cap of the central cylinder and their lower openings are located under the bottom plate of the central cylinder; there are micropore diffusers equipped right under the lower openings of the influent pipes and check valves secured at the lower parts of the influent pipes; a multitude of backflow holes are located on the wall of the central cylinder that is higher than the packing area of outer cylinder.

3. A contact reaction tower with internal circulation of ozone as defined in claim 2, wherein the outer cylinder is designed with a packing area; packing materials used therein are Pall rings; the packing materials are loaded on an evenly perforated support plate at the bottom of the packing area; a mesh is secured on the top of the packing area to prevent the packing materials from flowing away with water; micropore diffusers are designed under the packing area; a perforated gas distribution pipe and a perforated water distribution pipe are equipped under and in the middle of the packing area; a discharge pipe used for washing operation is located in the upper part of the reaction tower.

4. A contact reaction tower with internal circulation of ozone as defined in any of claims 1 to 3, wherein the vent pipe standing on the top of the reaction tower is 5m in length.

## Patentansprüche

1. Kontaktreaktionsturm mit interner Ozonzirkulation zur weitergehenden Behandlung von Industrieabwasser, bestehend aus einem Zentralzylinder und einem Außenzylinder, wobei der Zentralzylinder mit Hubrohren und Zuflussrohren ausgestattet ist, und an der Wand des Zentralzylinders Rückflusslöcher vorhanden sind; die Hubrohre, Zuflussrohre und Rückflusslöcher eine Zirkulation des Wasserstroms zwischen dem Zentralzylinder und dem Außenzylinder bilden, die dann die interne Zirkulation des Reaktionsturms bewirkt; der gesamte Reaktionsturm abgedichtet ist, und oben auf dem Reaktionsturm ein Entlüftungsrohr steht; und wobei der Zentralzylinder an beiden Enden abgedichtet ist und mit 2 - 4 Hubrohren und 1 - 2 Zuflussrohren ausgestattet ist; wobei innerhalb der Hubrohre Mikroporenbelüftungsrohre installiert sind; und wobei die Wand des Zentralzylinders, die unter der Bodenplatte ist, mit Perforationen zur Wasserverteilung konzipiert ist.

2. Kontaktreaktionsturm mit interner Ozonzirkulation wie in Anspruch 1 definiert, wobei im Zentralzylinder Hubrohre stehen, deren obere Enden durch die obere Kappe des Zentralzylinders laufen, und deren untere Öffnungen sich am unteren Teil des Zentralzylinders befinden; die Zuflussrohre durch den gesamten Zentralzylinder laufen, nämlich ihre oberen Enden aus der oberen Kappe des Zentralzylinders hervortreten und ihre unteren Öffnungen sich unter der Bodenplatte des Zentralzylinders befinden; Mikroporendiffuser direkt unter den unteren Öffnungen der Zuflussrohre eingerichtet sind, und Rückschlagventile an den unteren Teilen der Zuflussrohre befestigt sind; eine Vielzahl von Rückflusslöchern sich an der Wand des Zentralzylinders befinden, die höher ist als der Packungsbereich des Außenzylinders.

3. Kontaktreaktionsturm mit interner Ozonzirkulation wie in Anspruch 2 definiert, wobei der Außenzylinder mit einem Packungsbereich konzipiert ist; darin verwendete Packungsmaterialien Pall-Ringe sind, die Packungsmaterialien auf eine gleichmäßig perforierte Trägerplatte an dem Boden des Packungsbereichs geladen sind; ein Netz oben auf dem Packungsbereich befestigt ist, um zu verhindern, dass die Packungsmaterialien mit Wasser wegfließen; Mikroporendiffuser unter dem Packungsbereich konzipiert sind; ein perforiertes Gasverteilungsrohr und ein perforiertes Wasserverteilungsrohr unter und in der Mitte des Packungsbereichs eingerichtet sind; ein für den Waschvorgang verwendetes Abflussrohr sich im oberen Teil des Reaktionsturms befindet.

4. Kontaktreaktionsturm mit interner Ozonzirkulation wie in einem der Ansprüche 1 bis 3 definiert, wobei das oben auf dem Reaktionsturm stehende Entlüftungsrohr 5 m lang ist.

## Revendications

1. Tour de réaction par contact avec circulation interne d'ozone destinée au traitement de pointe des eaux usées industrielles, constituée d'un cylindre central et d'un cylindre externe, dans laquelle le cylindre central est équipé de tuyaux de relèvement et de tuyaux d'affluent et sur la paroi du cylindre central, sont présents des orifices de reflux ; les tuyaux de relèvement, les tuyaux d'affluent et les orifices de reflux forment une circulation du courant d'eau entre le cylindre central et le cylindre externe, qui réalise ensuite la circulation interne de la tour de réaction ; l'intégralité de la tour est scellée et sur le dessus de la tour de réaction se trouve un tuyau d'évent ; et dans laquelle le cylindre central est scellé aux deux extrémités et équipé de 2-4 tuyaux de relèvement et de 1-2 tuyaux d'affluent ; dans laquelle à l'intérieur des tuyaux de relèvement, sont installés des tuyaux d'aération à micropores ; et dans laquelle la paroi du cylindre central qui est en dessous de la plaque de fond est conçue avec des perforations pour la distribution d'eau.

2. Tour de réaction par contact avec circulation interne d'ozone selon la revendication 1, dans laquelle dans le cylindre central, se trouvent des tuyaux de relèvement, dont les extrémités traversent le capuchon supérieur du cylindre central et dont les ouvertures inférieures sont situées au niveau de la partie inférieure du cylindre central ; les tuyaux d'affluent traversent l'intégralité du cylindre central, à savoir, leurs extrémités supérieures sortent du capuchon supérieur du cylindre central et leurs extrémités inférieures sont situées en dessous de la plaque de fond du cylindre central ; il existe des diffuseurs à micropores aménagés juste en dessous des ouvertures inférieures des tuyaux d'affluent et des clapets anti-retour fixés au niveau des parties inférieures des tuyaux d'affluent ; une multitude d'orifices de reflux sont situés sur la paroi du cylindre central qui est plus élevée que la zone de remplissage du cylindre externe.

3. Tour de réaction par contact avec circulation interne d'ozone selon la revendication 2, dans laquelle le cylindre externe est conçu avec une zone de remplissage ; les matériaux de remplissage utilisés à l'intérieur sont des anneaux de Pall ; les matériaux de remplissage sont chargés sur une plaque de support perforée de manière régulière au niveau du fond de la zone de remplissage ; une maille est fixée sur le dessus de la zone de remplissage pour empêcher les matériaux de remplissage de s'écouler avec l'eau ; des diffuseurs à micropores sont prévus en dessous de la zone de remplissage ; un tuyau de distribution de gaz perforé et un tuyau de distribution d'eau perforé sont aménagés en dessous et au milieu de la zone de remplissage ; un tuyau d'évacuation utilisé pour l'opération de lavage est situé dans la partie supérieure de la tour de réaction.

4. Tour de réaction par contact avec circulation interne d'ozone selon l'une quelconque des revendications 1 à 3, dans laquelle le tuyau d'évent se trouvant sur le dessus de la tour de réaction fait 5 m de long.
